(19) Europäisches Patentamt
European Patent Office
Office européen des brevets

(11) **EP 2 491 105 B2**

(12) **NEW EUROPEAN PATENT SPECIFICATION**
After opposition procedure

(45) Date of publication and mention of the opposition decision:
**28.02.2018 Bulletin 2018/09**

(45) Mention of the grant of the patent:
**03.12.2014 Bulletin 2014/49**

(21) Application number: **10765430.3**

(22) Date of filing: **12.10.2010**

(51) Int Cl.:
***C11D 3/40*** (2006.01) ***C11D 3/37*** (2006.01)

(86) International application number:
**PCT/EP2010/065255**

(87) International publication number:
**WO 2011/047987 (28.04.2011 Gazette 2011/17)**

(54) **DYE POLYMERS**

FARBSTOFFPOLYMERE

POLYMÈRES DE COLORANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.10.2009 PCT/CN2009/001180**

(43) Date of publication of application:
**29.08.2012 Bulletin 2012/35**

(73) Proprietors:
- **Unilever PLC, A Company Registered in England and Wales under Company no. 41424**
**London EC4Y 0DY (GB)**
Designated Contracting States:
**CY GB IE MT**
- **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**

(72) Inventors:
- **BATCHELOR, Stephen, Norman**
**Wirral**
**Merseyside CH63 3JW (GB)**
- **BIRD, Jayne, Michelle**
**Wirral**
**Merseyside CH63 3JW (GB)**
- **CHEN, Honggang**
**Shanghai 200335 (CN)**
- **MENG, Sheng**
**Shanghai 200335 (CN)**
- **TAO, Qingsheng**
**Shanghai 200335 (CN)**
- **WANG, Jinfang**
**Shanghai 200335 (CN)**

(74) Representative: **Brooijmans, Rob Josephina Wilhelmus**
**Unilever Patent Group**
**Olivier van Noortlaan 120**
**3133 AT Vlaardingen (NL)**

(56) References cited:

| | |
|---|---|
| **EP-A1- 1 852 496** | **EP-A2- 0 317 859** |
| **WO-A1-2006/055787** | **WO-A1-2009/090124** |
| **WO-A1-2009/090125** | **WO-A2-2007/125523** |

- **Tech. Data sheet Lupasol® FG**
- **Tech. Data sheet Plantacare® 2000 UP**

Remarks:
The file contains technical information submitted after the application was filed and not included in this specification

EP 2 491 105 B2

## Description

### FIELD OF THE INVENTION

The present invention relates to polymeric shading dye and their use in laundry applications.

### BACKGROUND OF THE INVENTION

WO2006/055787 (Procter & Gamble) discloses Laundry formulations containing a cellulose ether polymer covalently bound to a reactive dye for whitening cellulosic fabric. Such polymers provide poor performance on polyester fabrics.

### SUMMARY OF THE INVENTION

We have found that reactive dyes bound to polyamine polymers deposit well to polyester and cotton fabrics.
In one aspect the present invention provides a laundry treatment composition according to claim 1.
In another aspect the present invention provides a domestic method of treating a textile, according to claim 10.
In a further aspect the present invention provides a polyamine covalently bound to a reactive dye, the polyamine covalently bound to a reactive dye obtainable by reacting a reactive dye with a substrate, the substrate selected from: a partially ethoxylated polyethylene imine (EPEI).
Preferably, the laundry treatment composition is granular.

### DETAILED DESCRIPTION OF THE INVENTION

### DYE POLYMER

The dye polymer is provided by reacting a polyamine with a reactive dye.
The reactive dye according to claim 1 is a negatively charged reactive dye. The reactive dye according to claim 12 is preferably negatively charged.
The total loading of dyes on the polyamines is preferably in the range 0.001 wt % to 800 wt%, more preferably in the range 0.1 wt % to 200 wt %, most preferably in the range 1 wt % to 50 wt %.
The dye polymer is preferably blue or violet in colour. In this regard, a blue or violet colour is provided to the cloth to give a hue angle of 230 to 345, more preferably 265 to 330, most preferably 270 to 300. The cloth used is white bleached non-mercerised woven cotton sheeting.
Preferably, the molecular weight of the polyamine covalently bound to a reactive dye is from 800 to 200000, more preferably from 2000 to 30000.
Preferably when the polymer is ethoxylated the ethoxylate groups contain from 10 to 20 CH2-CH2-O repeating units (10EO to 20EO). In another aspect, preferably when the polymer is ethoxylated the ethoxylate groups contain from 5 to 9 CH2-CH2-O repeating units (5EO to 9EO).

### POLYAMINE

The polyamines are polyalkyl amines and are generally linear or branched. The amines may be primary, secondary or tertiary. Preferably the alkyl groups are ethylene and the polymer is formed by ring opening polymerisation of ethyleneimine to provide polyethyleneimine (PEI). Polyethyleneimine (PEI) in one aspect is preferred.
In another aspect, preferably the polyamines are ethoxylated to provide ethoxylated polyethyleneimine (EPEI). In this regard, a single or a number of amine functions are reacted with one or more alkylene oxide groups to form a polyalkylene oxide side chain. The alkylene oxide can be a homopolymer (for example ethylene oxide) or a random or block copolymer.
The polyethyleneimines (PEI's) suitable for use in the detergent compositions of the present invention can have the general formula: $(\text{-NHCH2CH2-})_x[\text{-N(CH2CH2NH2)CH2CH2-}]_y$ wherein x is an integer from about 1 to about 120000, preferably from about 2 to about 60000, more preferably from about 3 to about 24000 and y is an integer from about 1 to about 60000, preferably from about 2 to about 30000, more preferably from about 3 to about 12000. Specific examples of polyethylene imines are PEI-3, PEI-7, PEI-15, PEI-30, PEI-45, PEI-100, PEI-300, PEI-500, PEI 600, PEI-700, PEI-800, PEI-1000, PEI-1500, PEI-1800, PEI-2000, PEI-2500, PEI-5000, PEI-10000, PEI-25000, PEI 50000, PEI-70000, PEI-500000, PEI-5000000 and the like, 31 wherein the integer represents the average molecular weight of the polymer. PEI's which are designated as such are available through Aldrich.
Most preferably the PEI, before alkoxylation and/or reaction with a reactive dye, has an average molecular

weight of from 400 to 8000.

PEI's are usually highly branched polyamines characterized by the empirical formula (C2H5N)n with a molecular mass of 43.07 (as repeating units). They are commercially prepared by acid-catalyzed ring opening of ethyleneimine, also known as aziridine. (The latter, ethyleneimine, is prepared through the sulphuric acid esterification of ethanolamine).

PEI's are commercially available from the BASF Corporation under the trade name Lupasol ® (also sold as Polymin ®. These compounds can prepared as a wide range of molecular weights and product activities. Examples of commercial PEI's sold by BASF suitable for use in the present invention include, but are not limited to, Lupasol FG (R), Lupasol G-35(R), Lupasol p(R), Lupasol-P S(R), Lupasol- (Water-Free)(R) and the like.

The amine groups of PEI exist mainly as a mixture of primary, secondary and tertiary groups in the ratio of about 1:11 to about 1:21 with branching every 3 to 3.5 nitrogen atoms along a chain segment. Because of the presence of amine groups, PEI can be protonated with acids to form a PEI salt from the surrounding medium resulting in a product that is partially or fully ionized depending on pH. For example, about 73% of PEI is protonated at pH 2, about 50% of PEI is protonated at pH 4, about 33% of PEI is protonated at pH 5, about 25% of PEI is protonated at pH 8 and about 4% of PEI is protonated at pH 10. Therefore, since the detergent compositions of the present invention are buffered at a pH of about 6 to about 11, this suggests that PEI is about 4-30% protonated and about 70-96% unprotonated.

In general, PEI's can be purchased as their protonated or unprotonated form with and without water. When protonated PEI's are formulated in the compositions of the present invention they are deprotonated to a certain extent by adding a sufficient amount of suitable base. The deprotonated form of PEI is the preferred form, however moderate amounts of protonated PEI can be used and do not significantly detract from the present invention.

The PEI is preferably alkoxylated, most preferably ethoxylated. The PEI is partially alkoxylated so that at least one NH2 or NH is available for reaction with the reactive dye, preferably at least one NH2. The preferred degree of alkoxylation is from 0.2 to 50% of the primary and secondary amines are alkoxylated.

Suitable PEIs and EPEIs for reacting with reactive dyes are found in: WO2007/083262; WO 2006/113314; EP760846; US4597898; WO 2009/060409; WO 2008/114171; WO 2008/007320; EP 760846; WO 2009/065738; WO 2009/060409; WO 2005/063957; EP 996701; EP 918837; EP 917562; EP 907703; and, 6,156,720.

REACTIVE DYES

A reactive dye may be considered to be made up of a chromophore which is linked to a reactive group. Reactive dyes undergo addition or substitution reactions with -OH, -SH and -NH groups to form covalent bonds. The chromophore may be linked directly to the reactive group or via a bridging group. The chromophore serves to provide a colour and the reactive group covalently binds to a substrate.

Reactive dyes are described in Industrial Dyes (K.Hunger ed, Wiley VCH 2003). Many Reactive dyes are listed in the colour index (Society of Dyers and Colourists and American Association of Textile Chemists and Colorists).

Preferred reactive groups of the reactive dyes are dichlorotriazinyl, difluorochloropyrimidine, monofluorotrazinyl, dichloroquinoxaline, vinylsulfone, difluorotriazine, monochlorotriazinyl, bromoacrlyamide and trichloropyrimidine.

Most preferred reactive groups are monochlorotriazinyl; dichlorotriazinyl; and, vinylsulfonyl.

Chromophores are preferably selected from azo, anthraquinone, phthalocyanine, formazan and triphendioaxazine. More preferably, azo, anthraquinone, phthalocyanine, and triphendioaxazine. Most preferably, azo and anthraquinone.

Reactive dyes are preferably selected from reactive blue, reactive black, reactive red, reactive violet dyes. Preferably mixtures of reactive dyes are used to provide optimum shading effects. Preferred mixtures are selected from reactive black and reactive red; reactive blue and reactive red; reactive black and reactive violet; reactive blue and reactive violet. Preferably the number of blue or black dye moieties is in excess of the red or violet dye moieties. Most preferably a combination of a reactive blue and a reactive red dyes is used.

Examples of reactive red dyes are reactive red 21, reactive red 23, reactive red 180, reactive red 198, reactive red 239, reactive red 65, reactive red 66, reactive red 84, reactive red 116, reactive red 136, reactive red 218, reactive red 228, reactive red 238. reactive red 245, reactive red 264, reactive red 267, reactive red 268, reactive red 269, reactive red 270, reactive red 271, reactive red 272, reactive red 274, reactive red 275, reactive red 277, reactive red 278, reactive red 280, reactive red 281, reactive red 282.

Examples of reactive black azo dyes are reactive black 5, reactive black 31, reactive black 47, reactive black 49.

Examples of reactive blue azo dyes are reactive blue 59, reactive blue 238, reactive blue 260, reactive blue 265, reactive blue 267, reactive blue 270, reactive blue 271, reactive blue 275. Reactive blue azo dyes are preferably bis-azo.

Examples of reactive blue triphenodioxazine dyes are reactive blue 266, reactive blue 268, reactive blue 269.

Examples of reactive blue formazan dyes are reactive blue 220 and reactive blue 235.

Examples of preferred reactive blue phthalocyanine dyes are reactive blue 7, reactive blue 11, reactive blue 14, reactive blue 15, reactive blue 17, reactive blue 18, reactive blue 21, reactive blue 23, reactive blue 25, reactive blue

30, reactive blue 35, reactive blue 38, reactive blue 41, reactive blue 71, reactive blue 72.

Preferably, the reactive blue anthraquinone dye is of the following form:

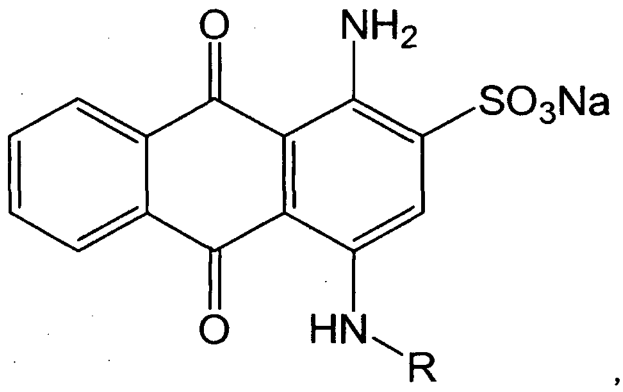

wherein R is an organic groups which contains a reactive group. Preferably, R is selected from: monochlorotriazinyl; dichlorotriazinyl; and, vinylsulfonyl.

Preferred reactive blue dyes are selected from: Reactive Blue 2; Reactive Blue 4; Reactive Blue 5; Reactive Blue 19; Reactive Blue 27; Reactive Blue 29; Reactive Blue 36; Reactive Blue 49; Reactive Blue 50; and, Reactive Blue 224.

Preferably, the reactive red azo dye is a reactive red mono-azo dye and preferred reactive red mono-azo dye is of the following form:

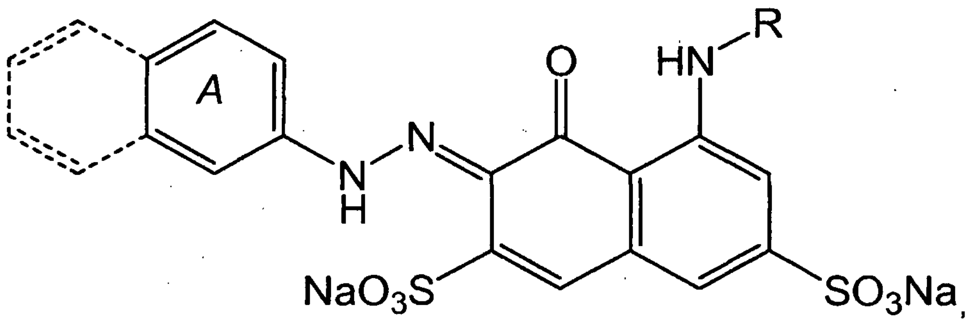

wherein the A ring is unsubstituted or substituted by a sulphonate group or a reactive group. Preferably, the A ring is napthyl and is substituted by two sulphonate groups. Preferably, R is an organic groups which contains a reactive group. Preferred reactive groups are monochlorotriazinyl; dichlorotriazinyl; and, vinylsulfonyl

Preferred reactive red dyes are selected from: Reactive Red 1; Reactive Red 2; Reactive Red 3; Reactive Red 12; Reactive Red 17; Reactive Red 24; Reactive Red 29; Reactive Red 83; Reactive Red 88; Reactive Red 120; Reactive Red 125; Reactive Red 194; Reactive Red 189; Reactive Red 198; Reactive Red 219; Reactive Red 220; Reactive Red 227; Reactive Red 241; Reactive Red 261; and, Reactive Red 253.

The reactive dyes are tethered to the polyamine by reacting with the NH, NH2 or OH group on the polyamine.

OTHER DYES

In a preferred embodiment of the invention, other shading colourants may be present. They are preferably selected from blue and violet pigment such as pigment violet 23, solvent and disperse dyes such as solvent violet 13, disperse violet 28, bis-azo direct dyes such as direct violet 9, 35, 51 and 99, and triphenodioxazine direct dyes such as direct violet 54.

Even more preferred is the presence of acid azine dyes as described in WO 2008/017570; the level of the acid azine dyes should be in the range from 0.0001 to 0.1 wt%. The acid azine dyes provide benefit predominately to the pure cotton garments and the cationic phenazine dyes to the polycotton garments. Preferred acid azine dyes are acid violet 50, acid blue 59 and acid blue 98. Blue and Violet cationic phenazine dyes may also be present.

Photobleaches such as sulphonated Zn/Al phthalocyanins may be present.

SURFACTANT

The composition comprises between 2 to 70 wt % of a surfactant, most preferably 10 to 30 wt %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Specific nonionic detergent compounds are $C_6$ to $C_{22}$ alkyl phenol-ethylene oxide condensates, generally 5 to 25 EO, i.e. 5 to 25 units of ethylene oxide per molecule, and the condensation products of aliphatic $C_8$ to $C_{18}$ primary or secondary linear or branched alcohols with ethylene oxide, generally 5 to 40 EO.

Suitable anionic detergent compounds which may be used are usually watersoluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher $C_8$ to $C_{18}$ alcohols, produced for example from tallow or coconut oil, sodium and potassium alkyl $C_9$ to $C_{20}$ benzene sulphonates, particularly sodium linear secondary alkyl $C_{10}$ to $C_{15}$ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium $C_{11}$ to $C_{15}$ alkyl benzene sulphonates and sodium $C_{12}$ to $C_{18}$ alkyl sulphates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a $C_{16}$ to $C_{18}$ primary alcohol sulphate together with a $C_{12}$ to $C_{15}$ primary alcohol 3 to 7 EO ethoxylate.

The nonionic detergent is preferably present in amounts greater than 10%, e.g. 25 to 90 wt % of the surfactant system. Anionic surfactants can be present for example in amounts in the range from about 5% to about 40 wt % of the surfactant system.

In another aspect which is also preferred the surfactant may be a cationic such that the formulation is a fabric conditioner.

To facilitate ease of use the formulation is preferably packed in pack sizes of 0.5 to 5kg. To reduce moisture ingress, the formulation is preferably packs in laminated cardboard packs or sealed plastic bags.

CATIONIC COMPOUND

When the present invention is used as a fabric conditioner it needs to contain a cationic compound.

Most preferred are quaternary ammonium compounds.

It is advantageous if the quaternary ammonium compound is a quaternary ammonium compound having at least one $C_{12}$ to $C_{22}$ alkyl chain.

It is preferred if the quaternary ammonium compound has the following formula:

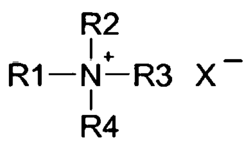

in which $R^1$ is a $C_{12}$ to $C_{22}$ alkyl or alkenyl chain; $R^2$, $R^3$ and $R^4$ are independently selected from $C_1$ to $C_4$ alkyl chains and X- is a compatible anion. A preferred compound of this type is the quaternary ammonium compound cetyl trimethyl quaternary ammonium bromide.

A second class of materials for use with the present invention are the quaternary ammonium of the above structure in which $R^1$ and $R^2$ are independently selected from $C_{12}$ to $C_{22}$ alkyl or alkenyl chain; $R^3$ and $R^4$ are independently selected from $C_1$ to $C_4$ alkyl chains and $X^-$ is a compatible anion.

A detergent composition according to claim 1 in which the ratio of (ii) cationic material to (iv) anionic surfactant is at least 2:1.

Other suitable quaternary ammonium compounds are disclosed in EP 0 239 910 (Proctor and Gamble).

It is preferred if the ratio of cationic to nonionic surfactant is from 1:100 to 50:50, more preferably 1:50 to 20:50.

The cationic compound may be present from 1.5 wt % to 50 wt % of the total weight of the composition. Preferably the cationic compound may be present from 2 wt % to 25 wt %, a more preferred composition range is from 5 wt % to 20 wt %.

The softening material is preferably present in an amount of from 2 to 60% by weight of the total composition, more preferably from 2 to 40%, most preferably from 3 to 30% by weight.

The composition optionally comprises a silicone.

Builders or Complexing agents:

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetra-acetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (carbonate (including bicarbonate and sesquicarbonate) are preferred builders.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

$$0.8\text{-}1.5\ M_2O.\ Al_2O_3.\ 0.8\text{-}6\ SiO_2$$

where M is a monovalent cation, preferably sodium. These materials contain some bound water and are required to have a calcium ion exchange capacity of at least 50 mg CaO/g. The preferred sodium aluminosilicates contain 1.5-3.5 $SiO_2$ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate. Preferably the laundry detergent formulation is carbonate built.

FLUORESCENT AGENT

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

It is preferred that the aqueous solution used in the method has a fluorescer present. When a fluorescer is present in the aqueous solution used in the method it is preferably in the range from 0.0001 g/l to 0.1 g/l, preferably 0.001 to 0.02 g/l.

PERFUME

Preferably the composition comprises a perfume. The perfume is preferably in the range from 0.001 to 3 wt %,

most preferably 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

It is preferred that the laundry treatment composition does not contain a peroxygen bleach, e.g., sodium percarbonate, sodium perborate, and peracid.

POLYMERS

The composition may comprise one or more other polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

ENZYMES

One or more enzymes are preferred present in a composition of the invention and when practicing a method of the invention.

Preferrably the level of each enzyme is from 0.0001 wt% to 0.1 wt% protein.

Especially contemplated enzymes include proteases, alpha-amylases, cellulases, lipases, peroxidases/oxidases, pectate lyases, and mannanases, or mixtures thereof.

Suitable lipases include those of bacterial or fungal origin. Chemically modified or protein engineered mutants are included. Examples of useful lipases include lipases from *Humicola* (synonym *Thermomyces*), e.g. from *H. lanuginosa* (*T. lanuginosus*) as described in EP 258 068 and EP 305 216 or from *H. insolens* as described in WO 96/13580, a *Pseudomonas* lipase, e.g. from *P. alcaligenes* or *P. pseudoalcaligenes* (EP 218 272), *P. cepacia* (EP 331 376), *P. stutzeri* (GB 1,372,034), *P. fluorescens, Pseudomonas* sp. strain SD 705 (WO 95/06720 and WO 96/27002), *P. wisconsinensis* (WO 96/12012), a *Bacillus* lipase, e.g. from *B. subtilis* (Dartois et al. (1993), Biochemica et Biophysica Acta, 1131, 253-360), *B. stearothermophilus* (JP 64/744992) or *B. pumilus* (WO 91/16422).

Other examples are lipase variants such as those described in WO 92/05249, WO 94/01541, EP 407 225, EP 260 105, WO 95/35381, WO 96/00292, WO 95/30744, WO 94/25578, WO 95/14783, WO 95/22615, WO 97/04079 and WO 97/07202, WO 00/60063.

Preferred commercially available lipase enzymes include Lipolase™ and Lipolase Ultra™, Lipex™, Lipoclean™ (Novozymes A/S).

The method of the invention may be carried out in the presence of phospholipase classified as EC 3.1.1.4 and/or EC 3.1.1.32. As used herein, the term phospholipase is an enzyme which has activity towards phospholipids. Phospholipids, such as lecithin or phosphatidylcholine, consist of glycerol esterified with two fatty acids in an outer (sn-1) and the middle (sn-2) positions and esterified with phosphoric acid in the third position; the phosphoric acid, in turn, may be esterified to an amino-alcohol. Phospholipases are enzymes which participate in the hydrolysis of phospholipids. Several types of phospholipase activity can be distinguished, including phospholipases $A_1$ and $A_2$ which hydrolyze one fatty acyl group (in the sn-1 and sn-2 position, respectively) to form lysophospholipid; and lysophospholipase (or phospholipase B) which can hydrolyze the remaining fatty acyl group in lysophospholipid. Phospholipase C and phospholipase D (phosphodiesterases) release diacyl glycerol or phosphatidic acid respectively.

The enzyme and the shading dye may show some interaction and should be chosen such that this interaction is not negative. Some negative interactions may be avoided by encapsulation of one or other of enzyme or shading dye and/or other segregation within the product.

Suitable proteases include those of animal, vegetable or microbial origin. Microbial origin is preferred. Chemically modified or protein engineered mutants are included. The protease may be a serine protease or a metallo protease, preferably an alkaline microbial protease or a trypsin-like protease. Preferred commercially available protease enzymes include Alcalase™, Savinase™, Primase™, Duralase™, Dyrazym™, Esperase™, Everlase™, Polarzyme™, and Kannase™, (Novozymes A/S), Maxatase™, Maxacal™, Maxapem™, Properase™, Purafect™, Purafect OxP™, FN2™, and FN3™ (Genencor International Inc.).

The method of the invention may be carried out in the presence of cutinase. classified in EC 3.1.1.74. The cutinase used according to the invention may be of any origin. Preferably cutinases are of microbial origin, in particular of bacterial, of fungal or of yeast origin.

Suitable amylases (alpha and/or beta) include those of bacterial or fungal origin. Chemically modified or protein engineered mutants are included. Amylases include, for example, alpha-amylases obtained from *Bacillus,* e.g. a special strain of *B. licheniformis,* described in more detail in GB 1,296,839, or the *Bacillus* sp. strains disclosed in WO 95/026397 or WO 00/060060. Commercially available amylases are Duramyl™, Termamyl™, Termamyl Ultra™, Natalase™, Stainzyme™, Fungamyl™ and BAN™ (NovozymesA/S), Rapidaser™ and Purastar™ (from Genencor International Inc.).

Suitable cellulases include those of bacterial or fungal origin. Chemically modified or protein engineered mutants are included. Suitable cellulases include cellulases from the genera *Bacillus, Pseudomonas, Humicola, Fusarium, Thielavia, Acremonium,* e.g. the fungal cellulases produced from *Humicola insolens, Thielavia terrestris, Myceliophthora thermophila,* and *Fusarium oxysporum* disclosed in US 4,435,307, US 5,648,263, US 5,691,178, US 5,776,757, WO 89/09259, WO 96/029397, and WO 98/012307. Commercially available cellulases include Celluzyme™, Carezyme™, Endolase™, Renozyme™ (Novozymes A/S), Clazinase™ and Puradax HA™ (Genencor International Inc.), and KAC-500(B)™ (Kao Corporation).

Suitable peroxidases/oxidases include those of plant, bacterial or fungal origin. Chemically modified or protein engineered mutants are included. Examples of useful peroxidases include peroxidases from *Coprinus,* e.g. from *C. cinereus,* and variants thereof as those described in WO 93/24618, WO 95/10602, and WO 98/15257. Commercially available peroxidases include Guardzyme™ and Novozym™ 51004 (Novozymes A/S).

ENZYME STABILIZERS

Any enzyme present in the composition may be stabilized using conventional stabilizing agents, e.g., a polyol such-as propylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in e.g. WO 92/19709 and WO 92/19708.

The indefinite article "a" or "an" and its corresponding definite article "the" as used herein means at least one, or one or more, unless specified otherwise.

Average molecular weights refer to weight average molecular weights.

Experimental

Example 1: Polymer Synthesis

PEI (Lupasol G35 ex BASF, Mw=2000) was purchased from BASF

(i) *Synthesis of Polyethylene glycol (PEG) MeO-methyl glycidyl ether*

PEG MeO-methyl glycidyl ether was synthesized as shown by the reaction schme.

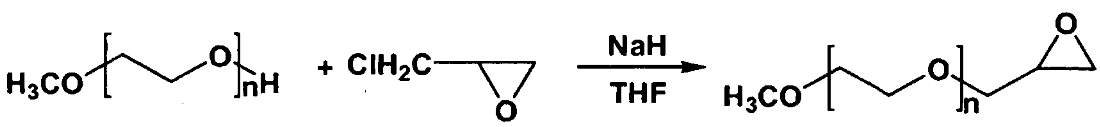


A slurry of NaH (0.1 mol, 4 g of 60% suspension in mineral oil) rinsed with anhydrous THF twice (2 x 20 ml) was stirred in 100 ml anhydrous THF. A solution of 37.5 g (0.05 mol) of MeO-PEG-OH in 50 ml THF was added dropwise. This mixture was stirred at room temperature for one hour. 39.2 ml of epichlorohydrin in 40 ml THF was added dropwise. Then the mixture was stirred at room temperature over night, followed by 4 h reflux. After neutralising the excess base with acetic acid, active charcoal was added and stirred for 1 hr. After filtrating, the solution was concentrated under reduced pressure and poured into 2 L of petrol ether and the waxy product was dried in vacuum.

*Synthesis of PEG modified PEI (2K)*

EPEI polymer were synthesized by mixing PEG MeO-methyl glycidyl ether with PEI in methanol and refluxing for 4 days. The viscous product was obtained after dialysis in water and lyophilisation.

Example 2: Dye-polymer Synthesis

0.5g of the polyethylene imine polymer of example 1, 0.1 g $Na_2CO_3$ and 0.1 g of reactive dye were mixed together in 35ml of demineralised water and heated at 65°C for 5 hours. Following the reaction the product was dialyzed against water (COMW=3500) for 72 hours. Water was then removed by rotary evaporation. The resultant polymer was dried in vacuum.

The following polymers were synthesized:

| | |
|---|---|
| (P1) PEG750-PEI2000 | 0.10g Reactive Blue 4 (RB4) |
| (P2) PEG750-PEI800 | 0.10g Reactive Blue 4 (RB4) |
| (P3) PEG350-PEI2000 | 0.10g Reactive Blue 4 (RB4) |
| (P4) PEG350-PEI2000 | 0.080g RB4 and 0.020g Reactive Red 2 (RR2) |

Where the integer after PEG and PEI represent the average molecular weight.

Example 3: Wash Performance

Woven Cotton, polyester and nylon-elastane fabrics were washed in an aqueous wash solution (demineralised water) containing 1 g/L Linear Alkyl benzene sulfonate, 1g/L sodium carbonate and 1g/L sodium chloride at a liquor to cloth ratio of 30:1. To the wash solution shading were added the polymers of example 1 such that the wash solution contained 5ppm of polymer. After 30 minutes of agitation the clothes were removed rinsed and dried. Washes were then repeated until 4 wash cycles had been accomplished. After the 1st 2nd and 4th wash the reflectance spectra of the cloth were measured on a reflectometer and the colour expressed as CIE L* a* b* values.

The increased in whiteness of the cloth was expressed as the change in blue:

$$\Delta b = b_{control} - b_{dye\text{-}polymer}.$$

The results are given in the table below

| Polymer | Δb 4th wash | | |
|---|---|---|---|
| | Polyester | Cotton | Nylon elastane |
| P1 | 3.8 | 4.0 | 0.2 |
| P2 | 2.1 | 4.1 | 0 |
| P3 | 5.5 | 5.9 | 1.0 |
| HEC-RB4* | 0.1 | 1.9 | 0.0 |

*comparative. HEC-RB4 is a cellulose ether polymer bound to RB4. It was synthesized as follows: 0.5g of hydroxyethylcellulose, 0.5g $Na_2CO_3$ and 0.05g of RB4 were mixed together in 100ml of demineralised water and heated at 60°C for 5 hours. Following the reaction the product was dialyzed against water (COMW=12000) for 72 hours. Water was then removed by rotary evaporation. The resultant polymer was dried in vacuum.

The polyethylene imine dye polymer show good deposition to both polyester and cotton unlike the cellulose ether polymer.

The build up profile of the dye-polymer on cotton and polyester are given below

| cotton | Δb | | |
|---|---|---|---|
| | 1st wash | 2nd wash | 4th wash |
| P1 | 2.5 | 3.5 | 4.0 |
| P2 | 3.5 | 3.9 | 4.1 |
| P3 | 3.7 | 5.3 | 5.9 |
| polyester | | | |

(continued)

| cotton | Δb | | |
|---|---|---|---|
| | 1st wash | 2nd wash | 4th wash |
| P1 | 1.8 | 2.7 | 3.8 |
| P2 | 0.9 | 1.2 | 2.1 |
| P3 | 2.8 | 4.1 | 5.5 |

The EPEI dye polymers do not build up linearly with wash number and their deposition saturates. This is a desired characteristic as reduces overblueing after multiple washes.

## Claims

**1.** A laundry treatment composition comprising:

(i) from 2 to 70 wt% of a surfactant; and,
(ii) from 0.0001 to 20.0 wt% of a polyamine covalently bound to a reactive dye (dye polymer), wherein the reactive dye is negatively charged and with the proviso that the laundry treatment composition does not contain more than 20.0 wt% of a polyamine covalently bound to a reactive dye (dye polymer).

**2.** A laundry treatment composition according to claim 1, wherein the polyamine is polyethylene imine (PEI).

**3.** A laundry treatment composition according to claim 1 or 2, wherein the polyamine is an ethoxylated polyethyleneimine (EPEI).

**4.** A laundry treatment composition according to any preceding claim, wherein the reactive dye is selected from: reactive blue; reactive black; reactive red; and, reactive violet dyes.

**5.** A laundry treatment composition according to claim 4, wherein the reactive dyes are selected from mixtures of: reactive black and reactive red; reactive blue and reactive red; reactive black and reactive violet; and, reactive blue and reactive violet, wherein the number of blue or black dye moieties is in excess of the red or violet dye moieties.

**6.** A laundry treatment composition according to any preceding claim, wherein the molecular weight of the polyamine covalently bound to a reactive dye is from 800 to 200000.

**7.** A laundry treatment composition according to any preceding claim, wherein the molecular weight of the polyamine covalently bound to a reactive dye is from 2000 to 30000.

**8.** A laundry treatment composition according to any preceding claim, wherein the ethoxylated polyethyleneimine is from 10EO to 20EO.

**9.** A laundry treatment composition according to any preceding claim, wherein the ethoxylated polyethyleneimine is from 5EO to 9EO.

**10.** A domestic method of treating a textile, the method comprising the steps of:

(i) treating a textile with an aqueous solution of the polyamine covalently bound to a reactive dye as defined in any one of claims 1 to 9, the aqueous solution comprising from 10 ppb to 5000 ppm, of the polyamine covalently bound to a reactive dye; and, from 0.0 g/L to 3 g/L of a surfactant; and,
(ii) optionally rinsing and drying the textile.

**11.** A domestic method of treating a textile according to claim 10, wherein the aqueous solution comprises a fluorescer in the range from 0.0001 g/l to 0.1 g/l.

**12.** A polyamine covalently bound to a reactive dye, the polyamine covalently bound to a reactive dye obtainable by

reacting a reactive dye with a substrate, the substrate selected from: a partially ethoxylated polyethylene imine (EPEI).

**13.** A polyamine covalently bound to a reactive dye according to claim 12, wherein: the reactive dye is negatively charged and is selected from a chromophore selected from the group comprising of: azo; anthraquinone; phthalocyanine; formazan; and, triphendioxazine, having a reactive group selected from the group comprising: dichlorotriazinyl; difluorochloropyrimidine; monofluorotrazinyl; dichloroquinoxaline; vinylsulfone; difluorotriazine; monochlorotriazinyl; bromoacrlyamide; and, trichloropyrimidine.

**14.** A polyamine covalently bound to a reactive dye according to claim 12 or 13, wherein the molecular weight of the polyamine covalently bound to a reactive dye is from 800 to 200000.

**15.** A polyamine covalently bound to a reactive dye according to claim 14, wherein the molecular weight of the polyamine covalently bound to a reactive dye is from 2000 to 30000.

**Patentansprüche**

**1.** Wäschebehandlungszusammensetzung,
die Folgendes aufweist:

(i) 2 bis 70 Gew.-% eines Tensids und
(ii) 0,0001 bis 20,0 Gew.-% eines Polyamins, das kovalent an einen Reaktionsfarbstoff (Farbstoffpolymer) gebunden ist,

wobei der Reaktionsfarbstoff negativ geladen ist, und dies unter der Maßgabe, dass die Wäschebehandlungszusammensetzung nicht mehr als 20 Gew.-% eines Polyamins, das kovalent an einen Reaktionsfarbstoff (Farbstoffpolymer) gebunden ist, enthält.

**2.** Wäschebehandlungszusammensetzung nach Anspruch 1, wobei das Polyamin Polyethylenimin (PEI) ist.

**3.** Wäschebehandlungszusammensetzung nach Anspruch 1 oder 2, wobei das Polyamin ein ethoxyliertes Polyethylenimin (EPEI) ist.

**4.** Wäschebehandlungszusammensetzung nach einem der vorstehenden Ansprüche, wobei der Reaktionsfarbstoff ausgewählt ist aus den Farbstoffen: Reactive Blue, Reactive Black, Reactive Red und Reactive Violet.

**5.** Wäschebehandlungszusammensetzung nach Anspruch 4,
wobei die Reaktionsfarbstoffe ausgewählt sind aus Gemischen von: Reactive Black und Reactive Red, Reactive Blue und Reactive Red, Reactive Black und Reactive Violet und Reactive Blue und Reactive Violet, wobei die Anzahl der Einheiten des blauen oder schwarzen Farbstoffs im Überschuss zu den Einheiten des roten oder violetten Farbstoffs vorliegt.

**6.** Wäschebehandlungszusammensetzung nach einem der vorstehenden Ansprüche, wobei das Molekulargewicht des Polyamins, das kovalent an einen Reaktionsfarbstoff gebunden ist, 800 bis 200000 beträgt.

**7.** Wäschebehandlungszusammensetzung nach einem der vorstehenden Ansprüche, wobei das Molekulargewicht des Polyamins, das kovalent an einen Reaktionsfarbstoff gebunden ist, 2000 bis 30000 beträgt.

**8.** Wäschebehandlungszusammensetzung nach einem der vorstehenden Ansprüche, wobei das ethoxylierte Polyethylenimin 10 EO bis 20 EO aufweist.

**9.** Wäschebehandlungszusammensetzung nach einem der vorstehenden Ansprüche, wobei das ethoxylierte Polyethylenimin 5 EO bis 9 EO aufweist.

**10.** Verfahren zum Behandeln von Textilien im Haushalt,
wobei das Verfahren die folgenden Schritte aufweist:

(i) Behandeln der Textilien mit einer wässrigen Lösung des Polyamins, das kovalent an einen Reaktionsfarbstoff

gebunden ist, nach einem der Ansprüche 1 bis 9, wobei die wässrige Lösung 10 ppb bis 5000 ppm des Polyamins, das kovalent an einen Reaktionsfarbstoff gebunden ist, und 0,0 bis 3 g/l eines Tensids aufweist; und
(ii) gegebenenfalls Spülen und Trocknen der Textilien.

**11.** Verfahren zum Behandeln von Textilien im Haushalt nach Anspruch 10, wobei die wässrige Lösung einen Aufheller im Bereich von 0,0001 bis 0,1 g/l aufweist.

**12.** Polyamin, das kovalent an einen Reaktionsfarbstoff gebunden ist,
wobei das Polyamin, das kovalent an einen Reaktionsfarbstoff gebunden ist, durch Umsetzen eines Reaktionsfarbstoffs mit einem Substrat erhalten werden kann, wobei das Substrat ausgewählt ist aus: einem teilweise ethoxylierten Polyethylenimin (EPEI).

**13.** Polyamin, das kovalent an einen Reaktionsfarbstoff gebunden ist, nach Anspruch 12, wobei der Reaktionsfarbstoff negativ geladen ist und aus einem Chromophor ausgewählt ist, das aus der Gruppe ausgewählt ist, die Folgendes aufweist: Azo, Anthrachinon, Phthalocyanin, Formazan und Triphendioxazin mit einer reaktionsfähigen Gruppe, die aus der Gruppe ausgewählt ist, die Folgendes aufweist: Dichlortriazinyl, Difluorchlorpyrimidin, Monofluortriazinyl, Dichlorchinoxalin, Vinylsulfon, Difluortriazin, Monochlortriazinyl, Bromacrylamid und Trichlorpyrimidin.

**14.** Polyamin, das kovalent an einen Reaktionsfarbstoff gebunden ist, nach Anspruch 12 oder 13,
wobei das Molekulargewicht des Polyamins, das kovalent an einen Reaktionsfarbstoff gebunden ist, 800 bis 200000 beträgt.

**15.** Polyamin, das kovalent an einen Reaktionsfarbstoff gebunden ist, nach Anspruch 14,
wobei das Molekulargewicht des Polyamins, das kovalent an einen Reaktionsfarbstoff gebunden ist, 200 bis 30000 beträgt.

## Revendications

**1.** Composition de traitement de linge comprenant :

(i) de 2 à 70 % en poids d'un tensioactif ; et,
(ii) de 0,0001 à 20,0 % en poids d'une polyamine liée de manière covalente à un colorant réactif (polymère de colorant), dans laquelle le colorant réactif est négativement chargé et à condition que la composition de traitement de linge ne contient pas plus de 20,0 % en poids d'une polyamine liée de manière covalente à un colorant réactif (polymère de colorant).

**2.** Composition de traitement de linge selon la revendication 1, dans laquelle la polyamine est une polyéthylèneimine (PEI).

**3.** Composition de traitement de linge selon la revendication 1 ou 2, dans laquelle la polyamine est une polyéthylèneimine éthoxylée (EPEI).

**4.** Composition de traitement de linge selon l'une quelconque des revendications précédentes, dans laquelle le colorant réactif est choisi parmi : des colorants de bleu réactif ; noir réactif ; rouge réactif ; et, violet réactif.

**5.** Composition de traitement de linge selon la revendication 4, dans laquelle les colorants réactifs sont choisis parmi des mélanges de : noir réactif et rouge réactif ; bleu réactif et rouge réactif ; noir réactif et violet réactif ; et, bleu réactif et violet réactif, dans laquelle le nombre de moitiés de colorant bleu ou noir est en excès des moitiés de colorant rouge ou violet.

**6.** Composition de traitement de linge selon l'une quelconque des revendications précédentes, dans laquelle la masse moléculaire de la polyamine liée de manière covalente à un colorant réactif est de 800 à 200 000.

**7.** Composition de traitement de linge selon l'une quelconque des revendications précédentes, dans laquelle la masse moléculaire de la polyamine liée de manière covalente à un colorant réactif est de 2 000 à 30 000.

**8.** Composition de traitement de linge selon l'une quelconque des revendications précédentes, dans laquelle la polyéthylèneimine éthoxylée est de 10 EO à 20 EO.

9. Composition de traitement de linge selon l'une quelconque des revendications précédentes, dans laquelle la polyéthylèneimine éthoxylée est de 5 EO à 9 EO.

10. Procédé domestique pour le traitement d'un textile, le procédé comprenant les étapes de :

(i) traitement d'un textile avec une solution aqueuse de la polyamine liée de manière covalente à un colorant réactif selon l'une quelconque des revendications 1 à 9, la solution aqueuse comprenant de 10 ppb à 5 000 ppm, de la polyamine liée de manière covalente à un colorant réactif ; et, de 0,0 g/l à 3 g/l d'un tensioactif ; et,
(ii) rinçage éventuel et séchage du textile.

11. Procédé domestique pour le traitement d'un textile selon la revendication 10, dans lequel la solution aqueuse comprend un fluorescent dans l'intervalle de 0,0001 g/l à 0,1 g/l.

12. Polyamine liée de manière covalente à un colorant réactif, la polyamine liée de manière covalente à un colorant réactif pouvant être obtenue par réaction d'un colorant réactif avec un substrat, le substrat est choisi parmi : une polyéthylèneimine partiellement éthoxylée (EPEI).

13. Polyamine liée de manière covalente à un colorant réactif selon la revendication 12, dans laquelle : le colorant réactif est chargé négativement et est choisi parmi un chromophore choisi dans le groupe comprenant : un groupe azo ; anthraquinone ; phtalocyanine ; formazan ; et, triphènedioxazine, présentant un groupe réactif choisi dans le groupe comprenant : le dichlorotriazinyle ; la difluorochloropyrimidine ; le monofluorotriazinyle ; la dichloroquinoxaline ; la vinylsulfone ; la difluorotriazine ; le monochlorotriazinyle ; le bromoacrylamide ; et, la trichloropyrimidine.

14. Polyamine liée de manière covalente à un colorant réactif selon la revendication 12 ou 13, dans laquelle la masse moléculaire de la polyamine liée de manière covalente à un colorant réactif est de 800 à 200 000.

15. Polyamine liée de manière covalente à un colorant réactif selon la revendication 14, dans laquelle la masse moléculaire de la polyamine liée de manière covalente à un colorant réactif est de 2 000 à 30 000.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006055787 A
- WO 2007083262 A
- WO 2006113314 A
- EP 760846 A
- US 4597898 A
- WO 2009060409 A
- WO 2008114171 A
- WO 2008007320 A
- WO 2009065738 A
- WO 2005063957 A
- EP 996701 A
- EP 918837 A
- EP 917562 A
- EP 907703 A
- EP 6156720 A
- WO 2008017570 A
- EP 328177 A
- EP 070074 A
- EP 346995 A
- EP 0239910 A
- EP 0384070 A
- EP 258068 A
- EP 305216 A
- WO 9613580 A
- EP 218272 A
- EP 331376 A
- GB 1372034 A
- WO 9506720 A
- WO 9627002 A
- WO 9612012 A
- JP 64744992 B
- WO 9116422 A
- WO 9205249 A
- WO 9401541 A
- EP 407225 A
- EP 260105 A
- WO 9535381 A
- WO 9600292 A
- WO 9530744 A
- WO 9425578 A
- WO 9514783 A
- WO 9522615 A
- WO 9704079 A
- WO 9707202 A
- WO 0060063 A
- GB 1296839 A
- WO 95026397 A
- WO 00060060 A
- US 4435307 A
- US 5648263 A
- US 5691178 A
- US 5776757 A
- WO 8909259 A
- WO 96029397 A
- WO 98012307 A
- WO 9324618 A
- WO 9510602 A
- WO 9815257 A
- WO 9219709 A
- WO 9219708 A


### Non-patent literature cited in the description


- Industrial Dyes. Wiley VCH, 2003
- **SCHWARTZ ; PERRY.** *Surface Active Agents,* vol. 1
- **SCHWARTZ ; PERRY ; BERCH.** *Interscience,* 1949, vol. 2
- McCutcheon's Emulsifiers and Detergents. Interscience. Manufacturing Confectioners Company, 1958
- **H. STACHE.** Tenside-Taschenbuch. Carl Hauser Verlag, 1981
- **1992.** International Buyers Guide. CFTA Publications
- Chemicals Buyers Directory. Schnell Publishing Co, 1993
- **POUCHER.** *Journal of the Society of Cosmetic Chemists,* 1955, vol. 6 (2), 80
- **DARTOIS et al.** *Biochemica et Biophysica Acta,* 1993, vol. 1131, 253-360